# EUROPÄISCHE PATENTSCHRIFT

(11) **EP 2 451 064 B1**
(45) Veröffentlichungstag und Bekanntmachung des Hinweises auf die Patenterteilung: **19.06.2019**
(21) Anmeldenummer: 11008636.0
(22) Anmeldetag: 28.10.2011
(51) Int. Cl.: H02M 3/155, H02J 7/35

(54) **Hochsetzsteller**
Boost converter
Convertisseur élévateur

(30) Priorität: 05.11.2010 DE 102010050624; 16.02.2011 DE 102011011329
(43) Veröffentlichungstag der Anmeldung: 09.05.2012
(73) Patentinhaber: SEW-EURODRIVE GmbH & Co. KG, 76646 Bruchsal (DE)
(72) Erfinder: Schill, Christoph, 88213 Ravensburg (DE)
(74) Vertreter: Tüngler, Eberhard

(56) Entgegenhaltungen:
- US-A1- 2010 165 679

## Beschreibung

Die vorliegende Erfindung betrifft einen Hochsetzsteller gemäß Anspruch 1, insbesondere einen Hochsetzsteller mit Mehrfacheingang, und eine Wechselrichterschaltung gemäß Anspruch 6 mit einem solchen Hochsetzsteller. Bevorzugte Ausführungsformen sind in den abhängigen Ansprüchen definiert.

Hochsetzsteller werden sehr häufig in Stromversorgungen verschiedenster Art verwendet. Wie bei allen leistungselektronischen Baugruppen ist es dabei ein Ziel, einen möglichst hohen Wirkungsgrad bei möglichst geringen Kosten zu erreichen.

Ein Wechselrichter benötigt zur Erzeugung einer Wechselspannung in der Regel eine Zwischenkreisspannung einer bestimmten Höhe. Ein optimaler Wirkungsgrad wird üblicherweise erreicht, wenn die Zwischenkreisspannung genau an die zu erzeugende Wechselspannung angepasst ist.

**Aus der** US 2010/165679 A1 **ist als nächstkommender Stand der Technik ein hocheffizientes Universal-Schaltnetzteil bekannt.**

**Aus der** DE 10 2008 050402 A1 **ist eine Schaltungsanordnung mit einem Hochsetzsteller und eine Wechselrichterschaltung mit einer solchen Schaltungsanordnung bekannt.**

Solargeneratoren liefern abhängig von Lichteinfall, Temperatur und Anzahl der verschalteten Module im Allgemeinen eine stark schwankende Gleichspannung. Je breiter der Bereich der Eingangsgleichspannung ist, die ein Wechselrichter verarbeiten kann, umso mehr Möglichkeiten passender Modulkombinationen gibt es. Zum Beispiel ist bei voller Last ein Eingangsspannungsbereich von 1: 2 bzw. für Volllast bis Leerlauf von 1:2,5 wünschenswert.

Zur Anpassung des Solargenerators an den Wechselrichter wird daher häufig ein Hochsetzsteller verwendet, der die variable Gleichspannung auf eine relativ konstante Zwischenkreisspannung hochsetzt.

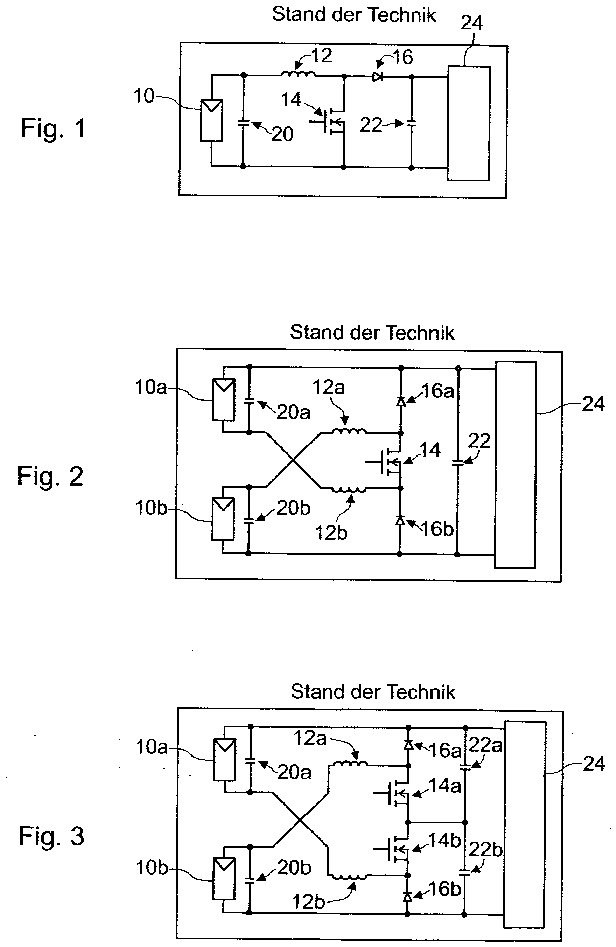

Fig. 1 zeigt die Grundform eines herkömmlichen Hochsetzstellers. Der Hochsetzsteller besitzt einen Eingang und einen Ausgang. Eine speisende Quelle 10 liefert eine Gleichspannung, die als Eingangsspannung am Eingang des Hochsetzstellers abgegriffen werden kann. Diese Eingangsspannung wird mit dem Hochsetzsteller (bestehend insbesondere aus einer Drossel 12, einem Schaltelement 14 und einer Diode 16) auf eine höhere Ausgangsspannung hochgesetzt, die am Ausgang 24 des Hochsetzstellers bereitgestellt wird. Die parallel zum Eingang bzw. Ausgang des Tiefsetzstellers geschalteten Kondensatoren 20 und 22 dienen zur Pufferung der Rippleströme.

Das Schaltelement 14 wird periodisch ein- und ausgeschaltet. Das Taktverhältnis wird über eine Steuerelektronik so gewählt, dass sich eine gewünschte Ausgangsspannung oder ein gewünschter Ausgangsstrom einstellt. Wenn das Schaltelement 14 geschlossen ist, fließt Strom von der Quelle 10 durch die Drossel 12, wobei Energie in der Drossel 12 zwischengespeichert wird. Wenn das Schaltelement 14 offen ist, fließt der Strom von der Quelle 10 über die Freilaufdiode 16 und die Drossel 12 in den Verbraucher, wobei die zuvor in der Drossel 12 gespeicherte Energie in den Verbraucher abgegeben wird.

Diese herkömmliche Schaltungsanordnung hat mehrere Nachteile:
- Am Eingang und Ausgang treten hohe Rippleströme auf.
- Es wird eine große Drossel benötigt, da große Energiemengen zwischengespeichert werden müssen.
- Die Belastung der Halbleiter ist hoch.
- Der Wirkungsgrad ist schlecht.

Insgesamt ist die Verwendung eines Tiefsetzstellers mit zusätzlichen Kosten, Gewicht und Volumen verbunden. Durch die zusätzlichen Verluste im Tiefsetzsteller wird zudem der Gesamtwirkungsgrad der Wechselrichterschaltung verringert.

So ist zum Beispiel aus der DE 10 2008 050 402 A1 ein Hochsetzsteller mit Mehrfacheingang bekannt, wie er in Fig. 2 dargestellt ist.

Dieser herkömmliche Hochsetzsteller wird aus zwei Gleichspannungsquellen 10a und 10b gleichzeitig gespeist. Beide Quellen 10a, 10b sind so über einen gemeinsamen Hochsetzsteller verbunden, dass sie bei geschlossenem Schaltelement 14 in Serie und bei geöffnetem Schaltelement 14 über die Freilaufdioden 16a, 16b parallel zum Ausgang 24 verschaltet sind.

Beträgt die Spannung der Gleichspannungsquellen 10a, 10b etwa 50% bzw. 100% der Spannung am Ausgang 24, so reicht eine statische Serien- bzw. Parallelschaltung aus, um den/die am Ausgang 24 angeschlossenen Verbraucher versorgen. Liegt die Spannung der Quellen dagegen zwischen 50% und 100% der Ausgangsspannung, so wird das Schaltelement 14 getaktet betrieben. Dabei wird das Tastverhältnis so gewählt, dass sich die gewünschten Spannungen bzw. Ströme an den Eingängen bzw. am Ausgang einstellen.

Im Gegensatz zum herkömmlichen Hochsetzsteller nach Fig. 1 fließt bei dieser herkömmlichen Ausführungsform eines Hochsetzstellers sowohl bei geöffnetem als auch bei geschlossenem Schaltelement 14 Energie von den Gleichspannungsquellen 10a, 10b zum Ausgang 24 bzw. zum Verbraucher. Daraus ergeben sich gegenüber der Schaltungsanordnung von Fig. 1 einige Vorteile.

Die Energie, die in den Drosseln 12a, 12b zwischengespeichert werden muss, bzw. die zirkulierende Blindleistung ist wesentlich kleiner. In der Folge sind auch die Baugröße der Drosseln 12a, 12b und deren Verluste erheblich verringert. Auch die Beanspruchung der Halbleiter-Bauelemente 14, 16a, 16b und die in ihnen entstehenden Verluste sind wesentlich kleiner.

Fig. 3 zeigt einen weiteren herkömmlichen Hochsetzsteller, wie er zum Beispiel in der nachveröffentlichten deutschen Patentanmeldung DE 10 2010 006 124.7 beschrieben ist.

Der herkömmliche Hochsetzsteller von Fig. 3 arbeitet im Wesentlichen wie der in Fig. 2 dargestellte Hochsetzsteller. Er verfügt jedoch über zwei in Reihe geschaltete Schaltelemente 14a, 14b, welche mit einem Potenzial verbunden sind, das ungefähr in der Mitte zwischen den Potenzialen des Ausgangs liegt und z.B. über eine Kondensatorhalbbrücke 22a, 22b bereitgestellt werden kann.

Der Vorteil dieser herkömmlichen Schaltungsanordnung liegt darin, dass die Spannung an den Schaltelementen 14a, 14b nur halb so groß ist wie die Ausgangsspannung. Außerdem können beide Schaltelemente asynchron getaktet werden. Wenn man von einer konstanten Maximalleistung der Gleichspannungsquellen ausgeht, was z.B. beim Einsatz eines Hochsetzstellers in Solarwechselrichterschaltungen der Fall ist, so ist der Strom aus den Quellen umso höher, je geringer ihre Spannung ist.

Daraus folgt eine Problematik der herkömmlichen Schaltungsanordnungen von Fig. 2 und 3. Bei kleiner Quellenspannung mit statischer Serienschaltung der Quellen 10a, 10b ist der Strom in den Drosseln 12a, 12b doppelt so groß wie bei großer Quellenspannung mit statischer Parallelschaltung. Die Drosseln 12a, 12b müssen jeweils für den maximal auftretenden Strom ausgelegt werden. Da das Bauvolumen von Drosseln quadratisch zum Strom zunimmt, sind die benötigten Drosseln 12a, 12b relativ groß, wenn auch deutlich kleiner als beim herkömmlichen Hochsetzsteller nach Fig. 1.

Der Erfindung liegt die Aufgabe zugrunde, einen verbesserten Hochsetzsteller mit Mehrfacheingang mit einem erhöhten Wirkungsgrad zu schaffen.

Diese Aufgabe wird gelöst durch einen Hochsetzsteller mit den Merkmalen des Anspruches 1. Vorteilhafte Ausgestaltungen und Weiterbildungen der Erfindung sind den Unteransprüchen zu entnehmen.

Der Hochsetzsteller der Erfindung weist zwei oder mehr Eingänge, an welchen jeweils eine Gleichspannungsquelle anschließbar ist, und einen gemeinsamen Ausgang, an welchem eine Gleichspannung bereitgestellt werden kann, deren Wert größer oder gleich als diejenigen der Eingangsspannungen ist, auf. Der gemeinsame Ausgang ist mit jedem der mehreren Eingänge jeweils über eine positive Zuleitung und eine negative Zuleitung verbunden, wobei in der positiven Zuleitung und/oder der negativen Zuleitung von jedem Eingang wenigstens eine Drossel angeordnet ist und in der positiven Zuleitung und/oder der negativen Zuleitung von jedem Eingang wenigstens ein Gleichrichtelement angeordnet ist. Der erfindungsgemäße Hochsetzsteller ist ferner dadurch gekennzeichnet, dass die Eingänge mittels zwei oder mehr Schaltelementen über die Drosseln in Serie schaltbar sind, wobei jeweils mindestens zwei der Drosseln parallel schaltbar sind.

Ausgehend von den herkömmlichen Hochsetzstellern gemäß Fig. 2 oder 3 ist die Schaltungsstruktur des erfindungsgemäßen Hochsetzstellers so verändert, dass bei einer Serienschaltung der Eingänge des Hochsetzstellers jeweils mindestens zwei Drosseln über Schaltelemente parallel geschaltet werden können. Dadurch kann der Strom auf die Drosseln aufgeteilt werden.

Daraus folgt zum Beispiel für den Fall eines erfindungsgemäßen Hochsetzstellers mit zwei Eingängen, dass bei statischer Serienschaltung der Eingänge der Drosselstrom halbiert werden kann und somit gleich groß ist wie bei statischer Parallelschaltung. Es kann gezeigt werden, dass auch im getaktetem Betrieb der Drosselstrom nicht wesentlich größer wird. Daraus ergeben sich verschiedene Vorteile.

Die benötigten Drosseln sind deutlich kleiner, da der in ihnen fließende Maximalstrom wesentlich verringert ist im Vergleich zum Stand der Technik nach Fig. 1, 2 oder 3. Außerdem sind die Verluste in den Drosseln kleiner. Ferner ist die Strombelastung der Halbleiterbauelemente wesentlich reduziert.

Um einen erweiterten Eingangsspannungsbereich zu erhalten, wird der erfindungsgemäße Hochsetzsteller auf den Betrieb mit zwei oder mehr Quellen verallgemeinert. Bei statischer Serienschaltung von n Quellen ergibt sich dann eine n-fache Ausgangsspannung im Vergleich zu statischer Parallelschaltung.

Die Schaltelemente des erfindungsgemäßen Hochsetzstellers sind vorzugsweise Halbleiterschalter. Diese Halbleiterschalter sind vorzugsweise getaktet oder statisch betreibbar.

Die Schaltelemente des erfindungsgemäßen Hochsetzstellers können vorzugsweise mit fester oder variabler Frequenz getaktet werden.

Die Schaltelemente des erfindungsgemäßen Hochsetzstellers können vorzugsweise synchron oder asynchron zueinander getaktet werden.

Vorzugsweise ist zudem eine Steuerelektronik vorhanden, welche den Strom und/oder die Spannung am Eingang und/oder an den Ausgängen des Hochsetzstellers regelt, indem sie die Taktung der Schaltelemente variiert.

Den Schaltelementen des erfindungsgemäßen Hochsetzstellers sind vorzugsweise antiparallele Freilaufdioden parallel geschaltet.

Zudem sind vorzugsweise Maßnahmen bzw. Mittel zum stromlosen und/oder spannungslosen Schalten der Schaltelemente vorgesehen.

Die Gleichrichtelemente des erfindungsgemäßen Hochsetzstellers sind vorzugsweise als Halbleiterdioden oder Synchrongleichrichter ausgeführt.

Vorzugsweise sind ferner Pufferkondensatoren parallel zu den Eingängen und/oder zum Ausgang des Hochsetzstellers geschaltet.

Die Drosseln des Hochsetzstellers können wahlweise separat, teilweise separat und teilweise miteinander gekoppelt oder vollständig miteinander gekoppelt sein.

Ferner sind vorzugsweise Schutzmaßnahmen vorgesehen, um im Fehlerfall eine Serienschaltung der mehreren Eingänge des Hochsetzstellers zu verhindern.

In einer bevorzugten Ausführungsform der Erfindung ist der Pluspol jedes Einganges mit Ausnahme des ersten über eine Drossel und ein Schaltelement mit dem Minuspol des vorhergehenden Einganges verbunden und ist zwischen einen Verbindungspunkt der Drossel mit dem Schaltelement und den Pluspol des Ausganges ein Gleichrichtelement geschaltet, und ist der Minuspol jedes Einganges mit Ausnahme des letzten über eine Drossel und ein Schaltelement mit dem Pluspol des nachfolgenden Einganges verbunden und ist zwischen einen Verbindungspunkt der Drossel mit dem Schaltelement und den Minuspol des Ausganges ein Gleichrichtelement geschaltet.

In einer anderen bevorzugten Ausführungsform der Erfindung ist der Pluspol jedes Einganges mit Ausnahme des ersten über eine Drossel und ein Schaltelement mit dem Minuspol des vorhergehenden Einganges verbunden und ist zwischen einen Verbindungspunkt der Drossel mit dem Schaltelement und den Pluspol des vorhergehenden Einganges ein Gleichrichtelement geschaltet, und ist der Minuspol jedes Einganges mit Ausnahme des letzten über eine Drossel und ein Schaltelement mit dem Pluspol des nachfolgenden Einganges verbunden und ist zwischen einen Verbindungspunkt der Drossel mit dem Schaltelement und den Minuspol des nachfolgenden Einganges ein Gleichrichtelement geschaltet.

In einer vorteilhaften Ausgestaltung der Erfindung ist der Pluspol des ersten Einganges mit dem Pluspol des Ausganges verbunden und ist der Minuspol des letzten Einganges mit dem Minuspol des Ausganges verbunden.

In einer weiteren vorteilhaften Ausgestaltung der Erfindung sind diejenigen der Drosseln, welche parallel schaltbar sind, mittels wenigstens einen weiteren Schaltelements und bevorzugt auch wenigstens einen weiteren Gleichrichtelements in Serie schaltbar. Bei getakteter Serienschaltung der mehreren Eingänge des Hochsetzstellers können auf diese Weise die Drosseln, welche parallel schaltbar sind, in Serie geschaltet werden, während die übrigen Schaltelemente inaktiv sind, um so einen noch höheren Wirkungsgrad zu erzielen.

In einer weiteren vorteilhaften Ausgestaltung der Erfindung sind zusätzliche Schaltelemente zwischen den positiven und negativen Zuleitungen von den Eingängen vorgesehen, um die mehreren Eingänge statisch in Serie oder parallel schalten zu können.

Schließlich können auch zwei oder mehr solche Hochsetzsteller gemäß der Erfindung parallel oder in Serie betrieben werden. Die parallel betriebenen Hochsetzsteller arbeiten dabei vorzugsweise im Multiphasenbetrieb, wobei weiter vorzugsweise einzelne Hochsetzsteller zur Erhöhung des Wirkungsgrades bei Teillast abgeschaltet werden können.

Der Hochsetzsteller der Erfindung kann in vorteilhafter Weise in einer Wechselrichterschaltung, insbesondere einer Solarwechselrichterschaltung, mit wenigstens einem Wechselrichter zum Umsetzen der von dem Hochsetzsteller an seinem Ausgang bereitgestellten Ausgangsspannung in eine Wechselspannung eingesetzt werden, um so den Wirkungsgrad der gesamten Wechselrichterschaltung zu steigern. Der Wechselrichter kann in üblicher Weise mit einem Netz (Stromnetz, Inselnetz) oder einem Verbraucher gekoppelt werden.

In einer vorteilhaften Ausgestaltung ist zudem eine Einrichtung zum Durchführen eines Maximum-Power-Point-Trackings der an den Eingängen des/der Hochsetzsteller(s) angeschlossenen Gleichspannungsquellen vorgesehen.

In einer weiteren vorteilhaften Ausgestaltung ist die Ausgangsspannung des wenigstens einen Hochsetzstellers dynamisch so regelbar ist, dass der wenigstens eine Wechselrichter in seinem optimalen Betriebszustand arbeitet.

Obige sowie weitere Merkmale und Vorteile der Erfindung werden aus der nachfolgenden Beschreibung verschiedener bevorzugter, nicht-einschränkender Ausführungsbeispiele anhand der beiliegenden Zeichnungen besser verständlich. Darin zeigen:
- Fig. 1: ein schematisches Blockschaltbild zur Erläuterung einer Grundform eines herkömmlichen Hochsetzstellers;
- Fig. 2: ein schematisches Blockschaltbild eines herkömmlichen Hochsetzstellers mit Mehrfacheingang;
- Fig. 3: ein schematisches Blockschaltbild eines herkömmlichen Hochsetzstellers mit Mehrfacheingang und mit Mittelpunktspotenzial;
- Fig. 4: ein schematisches Blockschaltbild eines ersten Ausführungsbeispiels eines erfindungsgemäßen Hochsetzstellers;
- Fig. 5: ein schematisches Blockschaltbild eines zweiten Ausführungsbeispiels eines erfindungsgemäßen Hochsetzstellers, ausgerüstet mit zusätzlichen Bauteilen zum statischen und dynamischen Überbrücken von vorhandenen Bauteilen;
- Fig. 6: ein schematisches Blockschaltbild eines dritten Ausführungsbeispiels eines erfindungsgemäßen Hochsetzstellers mit drei Eingängen;
- Fig. 7: ein schematisches Blockschaltbild eines vierten Ausführungsbeispiels eines erfindungsgemäßen Hochsetzstellers mit drei Eingängen;
- Fig. 8: ein Diagramm zur Veranschaulichung des verbesserten Wirkungsgrades des erfindungsgemäßen Hochsetzstellers im Vergleich zum Stand der Technik.

Die beschriebenen Varianten können jeweils für sich oder in vielen Fällen auch in Kombination miteinander umgesetzt werden.

Bei solchen Kombinationen ist es denkbar, dass je nach Betriebszustand, z.B. abhängig von der Höhe der Ein- oder Ausgangsspannung des Hochsetzstellers zwischen verschiedenen Varianten umgeschaltet wird, z.B. indem die Schaltelemente der betreffenden Variante aktiv bzw. inaktiv geschaltet werden. Dadurch kann z.B. jeweils die Variante bzw. die Betriebsart ausgewählt werden, welche unter den gegebenen Randbedingungen den besten Wirkungsgrad aufweist.

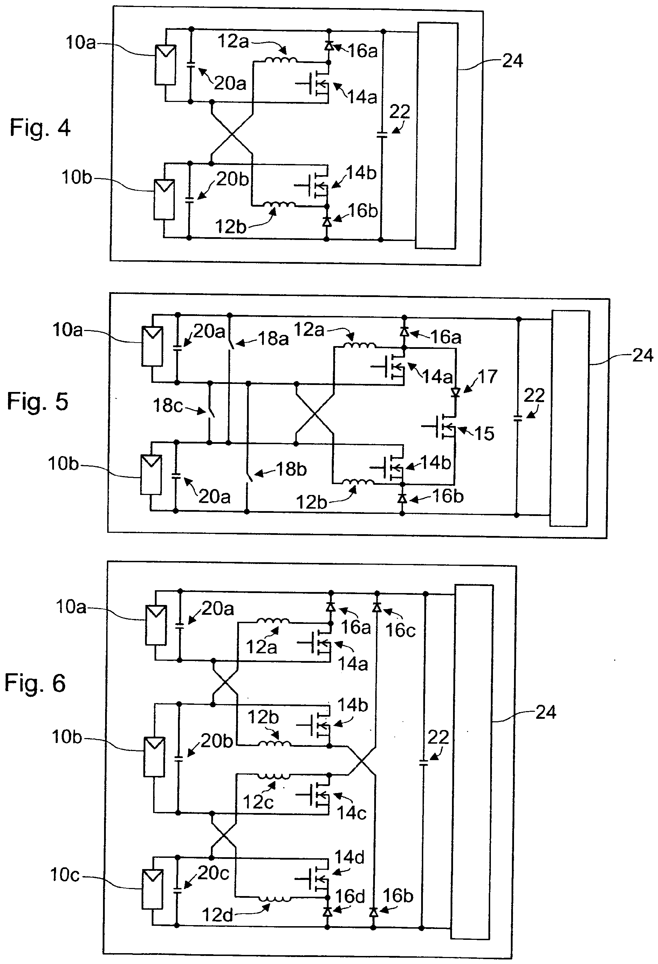

Fig. 4 zeigt eine erste Ausführungsform eines erfindungsgemäßen Hochsetzstellers.

Die Funktionsweise dieses Hochsetzstellers ist wie folgt. Die speisenden Quellen. 10a, 10b liefern jeweils eine Gleichspannung. Als Quellen sind verschiedenste Gleichstromquellen denkbar, wie z.B. Solargeneratoren, Brennstoffzellen, thermoelektrische Generatoren, Akkus, Batterien, Superkondensatoren, elektromagnetische Generatoren, AC/DC-Wandler, DC/DC-Wandler und dergleichen.

Die Gleichspannung der Quellen 10a, 10b wird mit dem gemeinsamen Hochsetzsteller, der im Wesentlichen aufgebaut ist aus zwei Drosseln 12a, 12b, zwei Schaltelementen 14a, 14b und zwei Dioden (Gleichrichtelemente der Erfindung) 16a, 16b, auf eine höhere Ausgangsspannung hochgesetzt. Beide Quellen 10a, 10b werden vorzugsweise mit gleicher Spannung und gleichem Strom, also symmetrisch betrieben. Als Schaltelemente 14a, 14b können z.B. MOSFETs oder IGBTs eingesetzt werden. Diese können über antiparallele Freilaufdioden verfügen. Die beiden Drosseln 12a und 12b können wahlweise gekoppelt oder separat sein.

Die Freilaufdioden 16a, 16b können durch aktive Schaltelemente ersetzt werden (Synchrongleichrichter), um den Wirkungsgrad zu steigern. Zur Verringerung der Schaltverluste können zusätzlich Umschwingnetzwerke und dergleichen eingebaut sein, welche das Schalten der Schaltelemente 14a, 14b im Strom- oder/und Spannungsnulldurchgang ermöglichen.

Die eingangsseitigen Kondensatoren 20a, 20b und der ausgangsseitige Kondensator 22 dienen zur Pufferung.

Am Ausgang 24 kann ein Verbraucher angeschlossen werden. Als Verbraucher sind auch Baugruppen möglich, welche die Energie weiterreichen, z.B. Wechselrichter oder Batterieladegeräte.

Die Gleichspannungsquellen 10a, 10b sind in dem Hochsetzsteller derart verschaltet, dass sie bei geschlossenen Schaltelementen 14a, 14b über die Drosseln 12a, 12b in Serie und bei offenen Schaltelementen 14a, 14b über die Dioden 16a, 16b und die Drosseln 12a, 12b parallel mit dem Ausgang 24 verbunden sind.

Beträgt die Spannung der Quellen 10a, 10b 100% der Ausgangsspannung, so reicht eine statische Parallelschaltung der Gleichspannungsquellen 10a, 10b aus, um die Ausgangsspannung zu liefern. Es entstehen dann keinerlei Schaltverluste. Beträgt die Spannung der Quellen 10a, 10b dagegen 50% der Ausgangsspannung, so reicht eine statische Serienschaltung der Quellen 10a, 10b aus, um die Ausgangsspannung zu liefern. Auch in diesem Fall entstehen keinerlei Schaltverluste.

Liegt die Spannung der Quellen 10a, 10b zwischen 50% und 100% der Ausgangsspannung, so werden die Schaltelemente 14a, 14b getaktet betrieben. Das Tastverhältnis wird über eine Steuerelektronik (nicht dargestellt) so geregelt, dass die gewünschte Spannung oder der gewünschte Strom am Ausgang 24 entsteht. Derartige Steuerelektroniken sind Stand der Technik und werden als bekannt vorausgesetzt. Es kann auch auf Spannung oder Strom an den Eingängen geregelt werden. Dies wird z.B. häufig angewandt, wenn als Quellen Solargeneratoren verwendet werden, welche am Punkt maximaler Leistung betrieben werden sollen. Das Tastverhältnis variiert zwischen 100% (statische Serienschaltung) und 0% (statische Parallelschaltung). Bei unterschiedlichen Tastverhältnissen an den Schaltelementen 14a und 14b ist es möglich, die Quellen unsymmetrisch zu belasten.

Beide Schaltelemente 14a, 14b können synchron oder asynchron betrieben werden. Die Ansteuerung der Schaltelemente 14a, 14b kann mit fester oder variabler Frequenz erfolgen. Liegt die Spannung der Quellen 10a, 10b in der Nähe von 50% bzw. 100% der Ausgangsspannung, so kann z.B. die Frequenz abgesenkt werden, um die Schaltverluste zu verringern.

Fig. 5 zeigt als zweites Ausführungsbeispiel eines erfindungsgemäßen Hochsetzstellers Möglichkeiten zur Überbrückung von Bauteilen, um den Wirkungsgrad weiter zu erhöhen:

Bei statischem Betrieb (Parallel- bzw. Serienschaltung der Quellen 10a, 10b) können Bauteile überbrückt oder die Quellen 10a, 10b direkt mit dem Ausgang 24 verbunden werden, um den Wirkungsgrad zu steigern. Dies kann z.B. mit Hilfe der Elemente 18a - 18c erfolgen. Dies können z.B. Relais oder Halbleiterschalter sein. Im Fall des Elements 18c kann auch eine Diode eingesetzt werden, wobei vorzugsweise eine langsame Diode mit sehr niedriger Flussspannung verwendet wird.

Auch beim getakteten Betrieb ist es möglich, durch Überbrückung von Bauteilen den Wirkungsgrad zu steigern. Bei hohen Quellenspannungen tritt an jedem der Schaltelementen 14a, 14b ein Spannungshub auf, der fast der Ausgangsspannung entspricht. Bei den herkömmlichen Schaltungen gemäß Fig. 2 oder 3 tritt dieser Spannungshub nur einmal am gemeinsamen Schaltelement 14 bzw. der Kombination der Schaltelemente 14a, 14b auf. Da die Drosselströme in diesem Fall beim Hochsetzsteller nach Fig. 2 oder 3 und beim erfindungsgemäßen Hochsetzsteller annähernd gleich sind, treten beim erfindungsgemäßen Hochsetzsteller fast doppelt so große Schaltverluste auf.

Um sowohl bei kleinen als auch bei großen Eingangsspannungen einen optimalen Wirkungsgrad zu erreichen, kann es sinnvoll sein, den erfindungsgemäßen Hochsetzsteller mit den herkömmlichen Schaltungsanordnungen nach Fig. 2 oder 3 zu kombinieren und bei hoher Eingangsspannung auf die Betriebsart dieser Schaltungen nach Fig. 2 oder 3 umzuschalten, da diese dann den höheren Wirkungsgrad aufweisen.

Dazu wird z.B. analog zur Schaltungsanordnung von Fig. 2 ein zusätzliches Schaltelement 15 eingefügt, welches die Drosseln 12a, 12b in Serie schalten kann. Um Rückwärtsströme bei eingeschalteten Schaltelementen 14a, 14b zu vermeiden, ist zusätzlich eine Diode (zusätzliches Gleichrichtelement) 17 eingebaut. Bei geringen Eingangsspannungen takten die Schaltelemente 14a, 14b, während das zusätzliche Schaltelement 15 inaktiv ist. Bei hohen Eingangsspannungen taktet hingegen das zusätzliche Schaltelement 15, während die Schaltelemente 14a und 14b inaktiv sind.

Analog zur herkömmlichen Schaltungsanordnung von Fig. 3 können auch zwei zusätzliche Schaltelemente mit den jeweils zugehörigen Sperrdioden eingebaut werden, wobei eine Verbindung zu einem Mittelpunktspotenzial genutzt wird.

### Erweiterung des relativen Eingangsspannungsbereichs:

Der relative Eingangsspannungsbereich, der bei der ersten Ausführungsform der Erfindung (Fig. 4) 1:2 bzw. 50% ... 100% der Ausgangsspannung beträgt, lässt sich vergrößern, indem die Zahl der Quellen erhöht wird. Dazu wird die Schaltung so erweitert, dass alle Quellen wie bei der Schaltung nach Fig. 4 sowohl parallel als auch seriell mit dem Ausgang verschaltet werden können, wobei bei der Serienschaltung wiederum Drosseln parallel geschaltet werden können.

In Fig. 6 ist beispielhaft eine erste Variante eines erfindungsgemäßen Hochsetzstellers mit drei Eingängen als drittes Ausführungsbeispiel gezeigt.

Alle drei 3 Quellen 10a - 10c werden vorzugsweise symmetrisch betrieben. Durch Einschalten der Schaltelemente 14a - 14d können die drei Quellen 10a - 10c über die Drosseln 12a - 12d in Serie geschaltet werden. Bei ausgeschalteten Schaltelementen 14a - 14d können die drei Quellen 10a - 10c hingegen über die Dioden 16a - 16d und die Drosseln 12a - 12d parallel mit dem Ausgang verbunden sein.

Beträgt die Spannung der Quellen 10a - 10c jeweils 100% der Ausgangsspannung, so reicht eine statische Parallelschaltung der drei Quellen 10a - 10c aus, um die Ausgangsspannung zu erzeugen. Beträgt die Spannung der Quellen 10a - 10c jeweils etwa 33% der Ausgangsspannung, so reicht eine statische Serienschaltung der drei Quellen 10a - 10c aus, um die Ausgangsspannung zu erzeugen.

Liegt die Spannung der Quellen 10a - 10c zwischen 33% und 100% der Ausgangsspannung, so werden die Schaltelemente 14a - 14d getaktet betrieben.

Die Schaltelemente 14a und 14d können synchron betrieben werden, ebenso die Schaltelemente 14b und 14c. Asynchroner Betrieb ist ebenfalls möglich. Die Drosseln 12a und 12d können gekoppelt sein, ebenso die Drosseln 12 b und 12c.

Wenn die Quellen 10a - 10c gleichmäßig belastet werden sollen, ist es nötig, das Tastverhältnis der Schaltelemente 14b und 14c etwas höher zu wählen als das der Schaltelemente 14a und 14d. Dies kann z.B. über eine Steuerelektronik erreicht werden, welche zusätzlich zu den Strömen und Spannungen an den Eingängen und/oder am Ausgang des Hochsetzstellers die Symmetrie der Quellenspannungen ausregelt.

Es ergibt sich mit dieser Schaltungsvariante ein erweiterter Eingangsspannungsbereich von 1:3 bzw. 33% ... 100% der Ausgangsspannung, was bei Quellen mit stark variierender Spannung vorteilhaft sein kann.

Nach dem in Fig. 6 veranschaulichten Schema kann die Schaltungsanordnung auch auf n Gleichspannungsquellen 10a ... 10n erweitert werden, wodurch der relative Eingangsspannungsbereich auf 1:n erhöht werden kann.

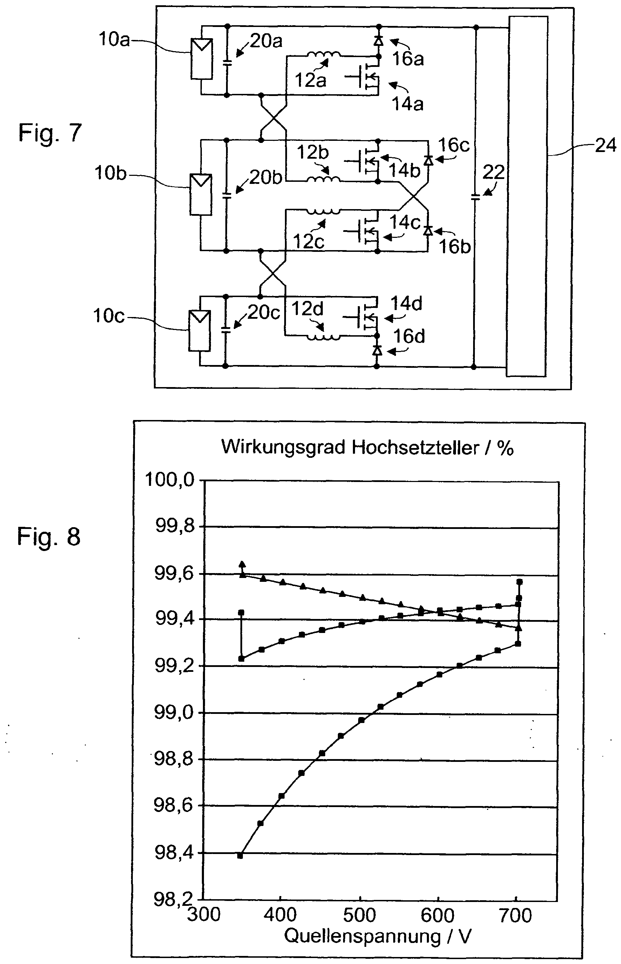

Fig. 7 zeigt beispielhaft eine zweite Variante eines erfindungsgemäßen Hochsetzstellers mit drei Eingängen als ein viertes Ausführungsbeispiel.

Die Dioden 16b und 16c sind hier zur Gleichspannungsquelle 10b hin statt zum Ausgang des Hochsetzstellers hin verschaltet. Bei dieser Variante können alle Drosseln 12a - 12d gekoppelt und die Schaltelemente 14a - 14d synchron betrieben werden. Auch ein asynchroner Betrieb ist möglich.

### Parallelschaltung, Serienschaltung

Es können auch zwei oder mehr Hochsetzsteller der Erfindung parallel geschaltet werden. In diesem Fall können die einzelnen Hochsetzsteller phasenversetzt betrieben werden, um die Ripplesströme an den Eingängen und dem Ausgang zu verringern (Multiphase-Betrieb). Außerdem können bei Teillast einzelne Hochsetzsteller ganz abgeschaltet werden, um den Teillastwirkungsgrad zu erhöhen.

Ebenso können auch zwei oder mehr Hochsetzsteller der Erfindung in Serie geschaltet werden.

### Schutzmaßnahmen

Bei hoher Quellenspannung kann es z.B. bei Defekt eines oder mehrerer Schaltelemente 14a - 14d zu einer ungewollten Serienschaltung der Gleichspannungsquellen 10a - 10c und damit zu einer unzulässig hohen Spannung am Ausgang 24 kommen.

Um dies zu verhindern, können Schutzvorrichtungen eingebaut werden, welche im Fehlerfall Strompfade unterbrechen oder kurzschließen. Dazu gibt es vielfache Möglichkeiten, wie beispielsweise
- Kurzschluss der Quellen (v.a. bei Quellen mit geringem Kurzschlussstrom wie z.B. Solargeneratoren). Dazu eignen sich z. B. Thyristorschaltungen ("Crowbar"-Schaltung), evtl. in Verbindung mit Sicherungen.
- Abtrennung der Quellen mittels Halbleitern oder Relais.

Da Relais geringe Durchlassverluste aufweisen, sind sie besser geeignet als Halbleiter. Allerdings schalten sie langsam und es können sich Lichtbögen an den Kontakten bilden. Um dem entgegenzuwirken, kann man Relais mit Halbleitern kombinieren. Zum Beispiel können Relais und Halbleiter parallel geschaltet werden. Zuerst öffnet das Relais, während der Halbleiter noch leitet; dann öffnet der Halbleiter. Damit werden Lichtbogen am Relaiskontakt verhindert. Es ist auch denkbar, die Quelle mit einem Halbleiter kurzzuschließen, dann die Quelle mittels Relais abzutrennen und schließlich den Halbleiter wieder zu öffnen, um eine Dauerbelastung der Quelle zu verhindern.

Die Schutzmaßnahmen können auch an anderer Stelle in der Schaltungsanordnung als direkt an den Gleichspannungsquellen umgesetzt werden.

### Verwendung in Wechselrichtern

Der Hochsetzsteller kann neben der direkten Speisung von Gleichstromverbrauchern oder Gleichstromnetzen auch zur Speisung von Gleichspannungs-Zwischenkreisen in anderen Geräten wie z.B. Wechselrichtern genutzt werden.

Ein Wechselrichter braucht zur Erzeugung einer Wechselspannung in der Regel eine Zwischenkreisspannung von einer bestimmten Höhe. Ein optimaler Wirkungsgrad wird erreicht, wenn die Zwischenkreisspannung genau auf die zu erzeugende Wechselspannung angepasst ist.

Wechselrichter werden häufig zur solaren Stromversorgung eingesetzt. Solargeneratoren liefern abhängig von Lichteinfall, Temperatur und Anzahl der verschalteten Module eine stark schwankende Gleichspannung. Je breiter der Bereich der Eingangs-Gleichspannung, die ein Wechselrichter verarbeiten kann, desto mehr Möglichkeiten hat der Installateur, passende Solarmodulkombinationen zu finden. Ein Eingangsspannungs-Bereich von 1:2 bei voller Last (bzw. 1:2,5 von Volllast bis Leerlauf) ist wünschenswert.

Zur Anpassung des Solargenerators an den Wechselrichter wird daher oft ein Hochsetzsteller verwendet. Dieser kann die variierende Gleichspannung des Solargenerators auf eine näherungsweise konstante Zwischenkreisspannung hochsetzen. Es ist auch möglich, die Zwischenkreisspannung mit einem überlagerten Wechselanteil zu modulieren, was für die optimale Anpassung des Wechselrichters von Vorteil sein kann. Leider treten im Hochsetzsteller zusätzliche Verluste auf, die den Gesamtwirkungsgrad des Wechselrichters verringern.

Der erfindungsgemäße Hochsetzsteller hat gegenüber dem Stand der Technik einen höheren Wirkungsgrad bei gleichzeitig verringertem Volumen, Gewicht und Kosten.

Obwohl beim erfindungsgemäßen Hochsetzsteller die Eingänge wechselweise in Serie und parallel geschaltet werden können, können die Potenziale an den Eingängen gegenüber dem Ausgang konstant gehalten werden. Dies ist wichtig, weil das Potenzial eines Solargenerators aus Gründen der elektromagnetischen Verträglichkeit keine hochfrequenten Sprünge aufweisen sollte.

Der erfindungsgemäße Hochsetzsteller kann dazu verwendet werden, ein Maximum-Power-Point-Tracking der Solargeneratoren auszuführen. Wenn die Spannung der Solargeneratoren sehr hoch ist bzw. höher als zum Betrieb des Wechselrichters erforderlich, kann der Hochsetzsteller auf statischen Parallelbetrieb geschaltet werden. Die Spannung der Solargeneratoren wird dann direkt an den Wechselrichter weitergeleitet. In diesem Fall kann der Wechselrichter das Tracking übernehmen.

In Verbindung mit dem Hochsetzsteller können verschiedene Wechselrichter-Topologien eingesetzt werden. Es können sowohl einphasige als auch mehrphasige Wechselrichter verwendet werden. Es können Wechselrichter zur Speisung von Inselnetzen oder zur Einspeisung in ein Stromnetz verwendet werden.

Fig. 8 zeigt den berechneten Wirkungsgradverlauf des erfindungsgemäßen Hochsetzstellers nach Fig. 4 in Abhängigkeit von der Quellenspannung (obere Kurve mit dreieckigen Markern). Die mittlere Kurve mit quadratischen Markern zeigt den Wirkungsgrad der herkömmlichen Schaltungsanordnungen nach Fig. 2 bzw. 3. Die untere Kurve zeigt den Wirkungsgrad der herkömmlichen Schaltungsanordnung nach Fig. 1.

Bei 700V Quellenspannung takten alle Hochsetzsteller nicht, wodurch die Schaltverluste entfallen und der Wirkungsgrad entsprechend erhöht ist. Beim erfindungsgemäßen Hochsetzsteller und den herkömmlichen Schaltungen nach Fig. 2 und 3 ist dies auch bei 350V Quellenspannung möglich durch die statische Serienschaltung der beiden Quellen.

### BEZUGSZIFFERNLISTE

- 10, 10a .. c: Gleichspannungsquelle
- 12, 12a .. d: Drossel
- 14, 14a .. d: Schaltelement
- 15: weiteres Schaltelement
- 16, 16a .. d: Gleichrichtelement
- 17: weiteres Gleichrichtelement
- 18a .. c: zusätzliches Schaltelement
- 20, 20a .. c: eingangsseitiger Pufferkondensator
- 22: ausgangsseitiger Pufferkondensator
- 24: Ausgang bzw. Verbraucher

## Patentansprüche

1. Hochsetzsteller, mit
zwei oder mehr Eingängen, an welchen jeweils eine **ein positives und ein negatives Potential aufweisende** Gleichspannungsquelle (10a, 10b, 10c) anschließbar ist; und
einem gemeinsamen Ausgang (24), an welchem eine Gleichspannung bereitgestellt werden kann, deren Wert größer oder gleich als diejenigen der Eingangsspannungen ist, wobei
der gemeinsame Ausgang (24) mit jedem der mehreren Eingänge jeweils über eine **ein** positives **Potential führende** Zuleitung, **also positive Zuleitung,** und eine **ein** negatives **Potential führende** Zuleitung, **also negative Zuleitung,** verbunden ist,
in der positiven Zuleitung und/oder der negativen Zuleitung von jedem Eingang wenigstens eine Drossel (12a, 12b, 12c, 12d) angeordnet ist, und in der positiven Zuleitung und/oder der negativen Zuleitung von jedem Eingang wenigstens ein Gleichrichtelement (16a, 16b, 16c, 16d) angeordnet ist,
**dadurch gekennzeichnet, dass**
die Eingänge mittels zwei oder mehr Schaltelementen (14a, 14b, 14c, 14d) über die Drosseln (12a, 12b, 12c, 12d) in Serie schaltbar sind, wobei jeweils mindestens zwei der Drosseln (12a, 12b, 12c, 12d) parallel schaltbar sind.

2. Hochsetzsteller nach Anspruch 1,
**dadurch gekennzeichnet, dass**
der Pluspol jedes Einganges mit Ausnahme des ersten über eine Drossel (12a, 12c) und ein Schaltelement (14a, 14c) mit dem Minuspol des vorhergehenden Einganges verbunden ist und zwischen einen Verbindungspunkt der Drossel (12a, 12c) mit dem Schaltelement (14a, 14c) und den Pluspol des Ausganges ein Gleichrichtelement (16a, 16c) geschaltet ist; und der Minuspol jedes Einganges mit Ausnahme des letzten über eine Drossel (12b, 12d) und ein Schaltelement (14b, 14d) mit dem Pluspol des nachfolgenden Einganges verbunden ist und zwischen einen Verbindungspunkt der Drossel (12b, 12d) mit dem Schaltelement (14b, 14d) und den Minuspol des Ausganges ein Gleichrichtelement (16b, 16d) geschaltet ist.

3. Hochsetzsteller nach Anspruch 1,
**dadurch gekennzeichnet, dass**
der Pluspol jedes Einganges mit Ausnahme des ersten über eine Drossel (12a, 12c) und ein Schaltelement (14a, 14c) mit dem Minuspol des vorhergehenden Einganges verbunden ist und zwischen einen Verbindungspunkt der Drossel (12a, 12c) mit dem Schaltelement (14a, 14c) und den Pluspol des vorhergehenden Einganges ein Gleichrichtelement (16a, 16c) geschaltet ist; und
der Minuspol jedes Einganges mit Ausnahme des letzten über eine Drossel (12b, 12d) und ein Schaltelement (14b, 14d) mit dem Pluspol des nachfolgenden Einganges verbunden ist und zwischen einen Verbindungspunkt der Drossel (12b, 12d) mit dem Schaltelement (14b, 14d) und den Minuspol des nachfolgenden Einganges ein Gleichrichtelement (16b, 16d) geschaltet ist.

4. Hochsetzsteller nach einem der vorhergehenden Ansprüche,
**dadurch gekennzeichnet, dass**
diejenigen der Drosseln (12a, 12b, 12c, 12d), welche parallel schaltbar sind, mittels wenigstens eines weiteren Schaltelements (15) in Serie schaltbar sind.

5. Hochsetzsteller nach einem der vorhergehenden Ansprüche,
**dadurch gekennzeichnet, dass**
zusätzliche Schaltelemente (18a, 18b, 18c) zwischen den positiven und negativen Zuleitungen von den Eingängen vorgesehen sind, um die mehreren Eingänge statisch in Serie oder parallel schalten zu können.

6. Wechselrichterschaltung, insbesondere Solarwechselrichterschaltung, mit wenigstens einem Hochsetzsteller nach einem der Ansprüche 1 bis 5; und wenigstens einem Wechselrichter zum Umsetzen der von dem/den Hochsetzsteller(n) bereitgestellten Ausgangsspannung(en) in eine Wechselspannung.

7. Wechselrichterschaltung nach Anspruch 6,
**dadurch gekennzeichnet, dass**
eine Einrichtung zum Durchführen eines Maximum-Power-Point-Trackings der an den Eingängen des/der Hochsetzsteller(s) angeschlossenen Gleichspannungsquellen (10a, 10b, 10c) vorgesehen ist.

8. Wechselrichterschaltung nach Anspruch 6 oder 7,
**dadurch gekennzeichnet, dass**
die Ausgangsspannung des wenigstens einen Hochsetzstellers dynamisch so regelbar ist, dass der wenigstens eine Wechselrichter in seinem optimalen Betriebszustand arbeitet.

## Claims

1. Boost converter, comprising:
two or more inputs, to each of which there can be connected a DC voltage source (10a, 10b, 10c) having a positive and a negative potential; and
a common output (24), at which a DC voltage can be provided, the value of said DC voltage being greater than or equal to those of the input voltages, wherein
the common output (24) is connected to each of the plurality of inputs respectively via a supply line conducting a positive potential, that is to say a positive supply line, and a supply line conducting a negative potential, that is to say a negative supply line,
at least one inductor (12a, 12b, 12c, 12d) is arranged in the positive supply line and/or the negative supply line from each input, and
at least one rectification element (16a, 16b, 16c, 16d) is arranged in the positive supply line and/or the negative supply line from each input,
**characterized in that**
the inputs can be connected in series via the inductors (12a, 12b, 12c, 12d) by means of two or more switching elements (14a, 14b, 14c, 14d), wherein in each case at least two of the inductors (12a, 12b, 12c, 12d) can be connected in parallel.

2. Boost converter according to claim 1,
**characterized in that**
the positive pole of each input, with the exception of the first input, is connected to the negative pole of the preceding input via an inductor (12a, 12c) and a switching element (14a, 14c), and a rectification element (16a, 16c) is connected between a connection point of the inductor (12a, 12c) to the switching element (14a, 14c) and the positive pole of the output; and
the negative pole of each input, with the exception of the last input, is connected to the positive pole of the subsequent input via an inductor (12b, 12d) and a switching element (14b, 14d), and a rectification element (16b, 16d) is connected between a connection point of the inductor (12b, 12d) to the switching element (14b, 14d) and the negative pole of the output.

3. Boost converter according to claim 1,
**characterized in that**
the positive pole of each input, with the exception of the first input, is connected to the negative pole of the preceding input via an inductor (12a, 12c) and a switching element (14a, 14c), and a rectification element (16a, 16c) is connected between a connection point of the inductor (12a, 12c) to the switching element (14a, 14c) and the positive pole of the preceding input; and
the negative pole of each input, with the exception of the last input, is connected to the positive pole of the subsequent input via an inductor (12b, 12d) and a switching element (14b, 14d), and a rectification element (16b, 16d) is connected between a connection point of the inductor (12b, 12d) to the switching element (14b, 14d) and the negative pole of the subsequent input.

4. Boost converter according to one of the preceding claims,
**characterized in that**
those inductors (12a, 12b, 12c, 12d) that can be connected in parallel can be connected in series by means of at least one further switching element (15).

5. Boost converter according to one of the preceding claims,
**characterized in that**
additional switching elements (18a, 18b, 18c) are provided between the positive and negative supply lines from the inputs so as to be able to connect the plurality of inputs in series or in parallel in a steady state.

6. Inverter circuit, in particular a solar inverter circuit, comprising
at least one boost converter according to one of claims 1 to 5; and
at least one inverter for converting the output voltage(s) provided by the boost converter(s) into an AC voltage.

7. Inverter circuit according to claim 6,
**characterized in that**
a device is provided for carrying out maximum power point tracking of the DC voltage sources (10a, 10b, 10c) connected to the inputs of the boost converter(s).

8. Inverter circuit according to claim 6 or 7,
**characterized in that**
the output voltage of the at least one boost converter can be dynamically controlled such that the at least one inverter operates in its optimal operating state.

## Revendications

1. Convertisseur élévateur, comportant
deux ou plusieurs entrées, à chacune desquelles peuvent être raccordées une source de tension continue (10a, 10b, 10c) présentant un potentiel positif et un potentiel négatif ; et
une sortie commune (24), à laquelle peut être fournie une tension continue dont la valeur est supérieure ou égale à celle des tensions d'entrée, dans lequel
la sortie commune (24) est reliée à chacune desdites plusieurs entrées par une ligne d'alimentation portant un potentiel positif, c'est-à-dire une ligne d'alimentation positive, et une ligne d'alimentation portant un potentiel négatif, c'est-à-dire une ligne d'alimentation négative,
au moins une bobine d'arrêt (12a, 12b, 12c, 12d) est disposée dans la ligne d'alimentation positive et/ou la ligne d'alimentation négative de chaque entrée, et au moins un élément de redressement (16a, 16b, 16c, 16d) est disposé dans la ligne d'alimentation positive et/ou la ligne d'alimentation négative de chaque entrée,
**caractérisé en ce que**
les entrées peuvent être couplées en série au moyen de deux ou plusieurs éléments de commutation (14a, 14b, 14c, 14d) par l'intermédiaire des bobines d'arrêt (12a, 12b, 12c, 12d), chaque fois au moins deux des bobines d'arrêt (12a, 12b, 12c, 12d) pouvant être couplées en parallèle.

2. Convertisseur élévateur selon la revendication 1,
**caractérisé en ce que**
le pôle positif de chaque entrée, à l'exception de la première, est relié au pôle négatif de l'entrée précédente par l'intermédiaire d'une bobine d'arrêt (12a, 12c) et d'un élément de commutation (14a, 14c) et un élément de redressement (16a, 16c) est couplé entre un point de liaison de la bobine d'arrêt (12a, 12c) avec l'élément de commutation (14a, 14c) et le pôle positif de la sortie ; et
le pôle négatif de chaque entrée, à l'exception de la dernière, est relié au pôle positif de l'entrée suivante par l'intermédiaire d'une bobine d'arrêt (12b, 12d) et d'un élément de commutation (14b, 14d) et un élément de redressement (16b, 16d) est couplé entre un point de liaison de la bobine d'arrêt (12b, 12d) avec l'élément de commutation (14b, 14d) et le pôle négatif de la sortie.

3. Convertisseur élévateur selon la revendication 1,
**caractérisé en ce que**
le pôle positif de chaque entrée, à l'exception de la première, est relié au pôle négatif de l'entrée précédente par l'intermédiaire d'une bobine d'arrêt (12a, 12c) et d'un élément de commutation (14a, 14c) et un élément de redressement (16a, 16c) est couplé entre un point de liaison de la bobine d'arrêt (12a, 12c) avec l'élément de commutation (14a, 14c) et le pôle positif de l'entrée précédente ; et
le pôle négatif de chaque entrée, à l'exception de la dernière, est relié par l'intermédiaire d'une bobine d'arrêt (12b, 12d) et d'un élément de commutation (14b, 14d) au pôle positif de l'entrée suivante et un élément de redressement (16b, 16d) est couplé entre un point de liaison de la bobine d'arrêt (12b, 12d) avec l'élément de commutation (14b, 14d) et le pôle négatif de l'entrée suivante.

4. Convertisseur élévateur selon l'une des revendications précédentes,
**caractérisé en ce que**
les bobines d'arrêt (12a, 12b, 12c, 12d) qui peuvent être couplées en parallèle peuvent être couplées en série au moyen d'au moins un autre élément de commutation (15).

5. Convertisseur élévateur selon l'une des revendications précédentes,
**caractérisé en ce que**
des éléments de commutation supplémentaires (18a, 18b, 18c) sont prévus entre les lignes d'alimentation positive et négative des entrées pour pouvoir coupler lesdites plusieurs entrées en série ou en parallèle de manière statique.

6. Circuit onduleur, en particulier circuit onduleur solaire, comportant au moins un convertisseur élévateur selon l'une des revendications 1 à 5 ; et au moins un onduleur pour convertir la ou les tensions de sortie fournies par le ou les convertisseurs élévateurs en une tension alternative.

7. Circuit onduleur selon la revendication 6,
**caractérisé en ce**
**qu'**un dispositif est prévu pour effectuer un suivi du point de puissance maximale des sources de tension continue (10a, 10b, 10c) raccordées aux entrées du ou des convertisseurs élévateurs.

8. Circuit onduleur selon la revendication 6 ou 7,
**caractérisé en ce que**
la tension de sortie dudit au moins un convertisseur élévateur peut être régulée dynamiquement de telle sorte que ledit au moins un onduleur travaille dans son état de fonctionnement optimal.
